# EUROPÄISCHE PATENTSCHRIFT

(11) **EP 2 125 965 B1**
(45) Veröffentlichungstag und Bekanntmachung des Hinweises auf die Patenterteilung: **23.11.2011**
(21) Anmeldenummer: 08707665.9
(22) Anmeldetag: 12.02.2008
(51) Int. Cl.: C09B 63/00, C09B 29/50, C09B 67/22, C08K 5/23

(54) **PIGMENTZUSAMMENSETZUNG AUF BASIS VON C.I. PIGMENT YELLOW 191**
PIGMENT COMPOSITION BASED ON C.I. PIGMENT YELLOW 191
COMPOSITION DE PIGMENT A BASE DE PIGMENT JAUNE C.I. 191

(30) Priorität: 20.02.2007 DE 102007008218
(43) Veröffentlichungstag der Anmeldung: 02.12.2009
(73) Patentinhaber: Clariant Finance (BVI) Limited, Road Town, Tortola (VG)
(72) Erfinder: BORCHERT, Till, 64291 Darmstadt (DE); SCHMIDT, Martin, U., 65931 Frankfurt am Main (DE); ACS, Arpad, 65824 Schwalbach a. T. (DE); JUNG, Rüdiger, 65779 Kelkheim (DE)
(74) Vertreter: Hütter, Klaus
(86) Internationale Anmeldenummer: PCT/EP2008/001037
(87) Internationale Veröffentlichungsnummer: WO 2008/101612

(56) Entgegenhaltungen:
- EP-A- 0 263 074
- WO-A-00/78872
- CZ-B6- 280 395
- DE-A1- 2 616 981

## Beschreibung

Die vorliegende Erfindung beschreibt eine Pigmentzusammensetzung auf Basis von C.I. Pigment Yellow 191 (nachfolgend P.Y. 191 genannt) mit anderen Farbmitteln als Dotierkomponente, sowie ihre Herstellung und Verwendung.

Als P.Y. 191 wird die Verbindung der Formel (1) bezeichnet, die aus einer Kupplung von diazotierter 2-Amino-4-chlor-5-methyl-benzolsulfonsäure mit 1-(3'-Sulfophenyl)-3-methyl-5-pyrazolon und nachfolgender Umsetzung der gebildeten Disulfosäure mit einem Calciumsalz entsteht. P.Y. 191 ist in EP-B1-0 361 431 beschrieben.

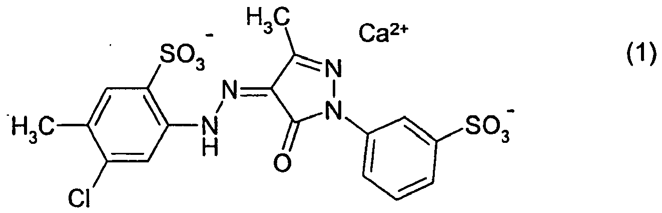

Im festen Zustand kann die Verbindung (1) auch in einer anderen tautomeren und/oder cis-trans-isomeren Form vorliegen. P.Y. 191 wird überwiegend für die Einfärbung von Kunststoffen verwendet. Das Pigment verfügt dafür über eine Vielzahl von günstigen Eigenschaften, wie z.B. eine hohe Lichtechtheit und eine hohe Hitzebeständigkeit. Die Farbstärke ist jedoch im Vergleich zu anderen Pigmenten, wie z.B. P.Y.180, deutlich geringer.

Die WO 00/78872 offenbart unlocktegelbe Azopigmente aus zwei verschiedenen aromatischen Aminen.

In der CZ-B6-280 395 wird eine Mischdiazötierung beschrieben, die zu Pigmentzusammensetzungen aus den Chromophoren von P.Y. 191 und P.Y. 183, jedoch mit gemischten Calcium/Fettammonium-Kationen führen.

Aufgabe der vorliegenden Erfindung war es, die Farbstärke von C.I. Pigment Yellow 191 zu erhöhen und die Transparenz zu verbessern.

Überraschenderweise wurde gefunden, dass bestimmte gelbe Pyrazolon-Pigmente, die in geeigneter Weise als Dotierkomponente zum P.Y.191 zugegeben werden, in der Lage sind, die Farbstärke gegenüber reinem P.Y.191 zu erhöhen und die Transparenz zu erhöhen.

Gegenstand der vorliegenden Erfindung sind Pigmentzusammensetzungen auf Basis von P.Y. 191 der Formel (1) 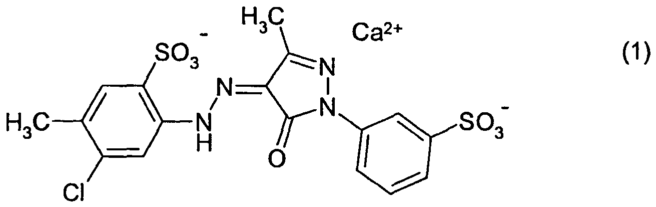 enthaltend 0,05 bis 5 Mol-%, bevorzugt 0,1 bis 5 Mol-%, besonders bevorzugt 0,5 bis 5 Mol-%, insbesondere bevorzugt 1 bis 5 Mol-%, bezogen auf die Summe von P.Y. 191 und dem weiteren gelben Farbmittel, mindestens eines weiteren gelben Farbmittels der Formel (2) und/oder von C.I. Pigment Yellow 100, 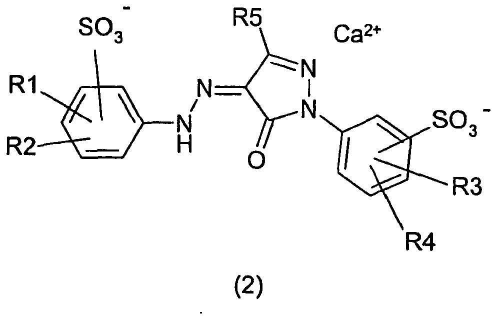
worin R1, R2, R3 und R4 unabhängig voneinander Wasserstoff, Halogen, -CH₃, -NO₂, oder NH-R6 mit R6 gleich C₁-C₄-Alkyl bedeuten;
R5 Methyl oder Carboxyl bedeutet,
und wobei die Verbindung der Formel (2) ungleich C.I. Pigment Yellow 191 ist.

Halogen kann dabei Fluor, Chlor, Brom oder Iod, bevorzugt Chlor, sein. Bevorzugte Verbindungen der Formel (2) sind solche mit R1 = R2 = Cl,
R3 = R4 = H oder Cl, und R5 = CH₃.
Ganz besonders bevorzugt ist P.Y. 183.

Die Verbindungen der Formel (1) und (2) können auch in einer anderen tautomeren und/oder cis-trans-isomeren Form vorliegen und ggf. noch Natrium- oder Chloridionen, sowie Wasser enthalten.

Die erfindungsgemäßen Pigmentzusammensetzungen sind schwerlöslich und zeichnen sich durch hohe Farbstärken, gute Echtheiten und gelbe Färbungen mit hoher Transparenz aus.

Gegenstand der Erfindung ist insbesondere eine Pigmentzusammensetzung, wie vorstehend definiert, und dadurch hergestellt, dass mindestens einer der nachfolgenden Herstellungsschritte für P.Y. 191 und das weitere gelbe Farbmittel gemeinsam durchgeführt werden: (a) Azokupplung; (b) Verlackung.

Gegenstand der Erfindung ist auch ein Verfahren zur Herstellung der erfindungsgemäßen Pigmentzusammensetzung durch Diazotierung, Azokupplung, Verlackung und gegebenenfalls Finish, dadurch gekennzeichnet, dass mindestens einer der nachfolgenden Herstellungsschritte für P.Y. 191 und das weitere gelbe Farbmittel gemeinsam durchgeführt werden: (a) Azokupplung; (b) Verlackung.

Beispielsweise können zwei unterschiedliche Amine der Formel (4) getrennt diazotiert und dann gemeinsam auf 1-(3'-Sulfophenyl)-3-methyl-5-pyrazolon gekuppelt werden.

In geeigneten Fällen können erfindungsgemäße Pigmentzusammensetzungen auch hergestellt werden, indem man 2-Amino-4-chlor-5-methyl-benzolsulfonsäure diazotiert und auf eine Mischung aus 1-(3'-Sulfophenyl)-3-methyl-5-pyrazolon und einer davon unterschiedlichen Verbindung der allgemeinen Formel (5) kuppelt. Alternativ kann auch nacheinander gekuppelt werden. 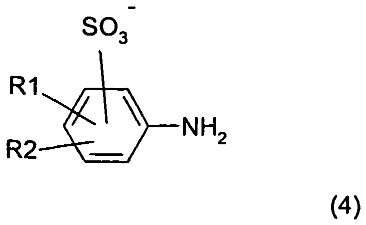 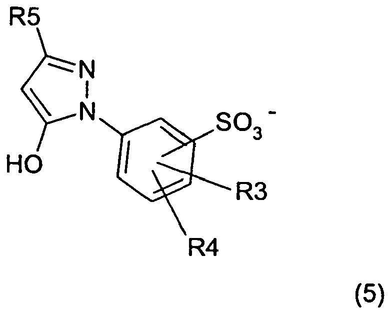 R1, R2, R3, R4 und R5 haben dabei die vorstehend genannten Bedeutungen.

Für die Diazotierungsreaktion eignen sich Alkalimetallnitrite oder die Alkylnitrite kurzkettiger Alkane, zusammen mit starken Mineralsäuren. Besonders geeignet sind Natriumnitrit und Salzsäure. Die Reaktion kann in einem Temperaturbereich von -5 °C bis +35 °C durchgeführt werden, vorzugsweise zwischen 0 °C und 10 °C.

Die Kupplung ist nach der direkten oder indirekten Methode möglich, erfolgt vorzugsweise jedoch direkt, d.h. das Diazoniumsalz wird zur vorgelegten Kuppelkomponente gegeben. Die Kuppelreaktion kann in einem Temperaturbereich zwischen -5 °C und 80 °C durchgeführt werden, vorzugsweise zwischen 10 °C und 50 °C, und bei einem pH-Wert zwischen pH 3 und14, vorzugsweise zwischen pH 5 und 8. Die Azokupplungsreaktion erfolgt vorzugsweise in wässriger Lösung oder Suspension, es können aber auch organische Lösemittel, gegebenenfalls im Gemisch mit Wasser eingesetzt werden. Im Allgemeinen wird die Kuppelkomponente, bezogen auf die Diazoniumverbindung, in einem leichten Überschuss eingesetzt, vorzugsweise wird 1 Äquivalent Diazokomponente mit 1,001 bis 1,10 Äquivalenten der Kuppelkomponente umgesetzt.

Die unverlackte Kuppelsuspension wird anschließend mit einem Kalziumsalz, bevorzugt Kalziumchlorid, verlackt.

Nach der Verlackung kann die erfindungsgemäße Pigmentzusammensetzung einer Wärmebehandlung in wässrigem, wässrig-organischem oder organischem Medium bei Temperaturen zwischen 60 °C und 98 °C, vorzugsweise zwischen 60 °C und 85 °C, gegebenenfalls unter Druck, für 0,1 bis 4 Stunden unterworfen werden.

Anschließend kann die erhaltene Pigmentsuspension auf die übliche Weise filtriert, der Presskuchen mit Wasser salzfrei gewaschen, getrocknet und gemahlen werden.
Es kann zweckmäßig sein, die aus der Synthese erhaltene
Pigmentzusammensetzung zunächst einer üblichen mechanischen Feinverteilung, z.B. einer Mahlung, zu unterwerfen. Die Feinverteilung kann durch Nass- oder Trockenmahlung oder Kneten erfolgen. An die Mahlung bzw. Knetung kann sich dann die oben beschriebene thermische Behandlung mit einem Lösemittel, mit Wasser, oder einem Lösemittel/Wasser-Gemisch anschließen, um das Pigment in eine gebrauchsfähige Form zu überführen.

In einer alternativen Ausführungsform können die erfindungsgemäßen Pigmentzusammensetzungen hergestellt werden, indem man P.Y.191 in Gegenwart der fertigen Dotierkomponente herstellt. Dabei kann die Dotierkomponente vor der Kupplung oder der Verlackung hinzugefügt werden.

Es ist möglich, an beliebigen Stellen des Verfahrens übliche Pigmentdispergatoren, anionische oder nichtionische Tenside, Entschäumer, Extender oder andere übliche Zuschlagstoffe zuzusetzen, sofern diese die erfindungsgemäßen Vorteile nicht beeinträchtigen. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Nachbehandlungen, oder nach den Nachbehandlungen zugegeben werden. Der am besten geeignete Zeitpunkt muss zuvor durch orientierende Versuche ermittelt werden.

Es ist auch möglich, einen oder mehrere der genannten Verfahrensschritte zur Herstellung der erfindungsgemäßen Pigmentzusammensetzungen in einem Mikroreaktor durchzuführen, wie z.B. in EP-A-1 257 602 beschrieben. In diesem Fall kann die Wärmebehandlung auch deutlich kürzer als eine Stunde sein, beispielsweise 0,01 bis 600 Sekunden.

Die erfindungsgemäßen Pigmentzusammensetzungen eignen sich zum Pigmentieren und Färben von natürlichen und synthetischen Materialien aller Art, insbesondere von Anstrichmitteln, Beschichtungssystemen, wie Tapetenfarben, Druckfarben, Dispersions- und Lackfarben, insbesondere für Metallic-Lacke, die wasser- und/oder lösemittelhaltig sind.
Ferner eignen sich die erfindungsgemäßen Pigmentzusammensetzungen zur Einfärbung makromolekularer Materialien aller Art, z.B. von natürlichen und synthetischen Fasermaterialien, bevorzugt Cellulosefasern, auch zur Papiermassefärbung wie zur Laminateinfärbung. Weitere Anwendungen sind die Herstellung von Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, Wurstdärmen, Saatgut, Düngemittel, Glas, insbesondere Glasflaschen, sowie zur Massefärbung von Dachziegeln, als Farbmittel in elektrophotographischen Tonern und Entwicklern, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmitteln sowie zum Einfärben von Kunststoffen bzw. hochmolekularen Materialien aller Art. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

Weiterhin eignen sich die erfindungsgemäßen Pigmentzusammensetzungen zur Herstellung von Drucktinten für den Einsatz in allen konventionellen Ink-Jet-Druckern, insbesondere für solche, die auf dem Bubble-Jet- oder Piezo-Verfahren beruhen, wie z.B. auf wässriger oder nichtwässriger Basis ("Solvent Based"), Mikroemulsionstinten, UV-härtbare Tinten sowie in solchen Tinten, die nach dem Hot-Melt-Verfahren funktionieren. Mit diesen Drucktinten kann Papier bedruckt werden, sowie natürliche oder synthetische Fasermaterialien, Folien und Kunststoffe. Zudem können die erfindungsgemäßen Pigmentzusammensetzungen zum Bedrucken verschiedenster Arten von beschichteten oder unbeschichteten Substratmaterialien verwendet werden, so z.B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d.h. dreidimensional gestaltet sein und sowohl vollständig oder nur teilweise bedruckt oder beschichtet werden.

Ferner sind die erfindungsgemäßen Pigmentzusammensetzungen geeignet als Farbmittel für Pulver und Pulverlacke, insbesondere für triboelektrisch oder elektrokinetisch versprühbare Pulverlacke, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Außerdem sind die erfindungsgemäßen Pigmentzusammensetzungen auch geeignet als Farbmittel für Farbfilter ("Colour Filter") für "Flat Panel Displays", sowohl für die additive wie für die subtraktive Farberzeugung, ferner für "Photo-Resists", sowie als Farbmittel für elektronische Tinten ("Electronic Inks" bzw. "e-inks") oder elektronisches Papier ("Electronic Paper" bzw. "e-paper").

In den nachfolgenden Beispielen bedeuten Prozente Gewichtsprozent und Teile Gewichtsteile.

### Vergleichsbeispiel (gemäß CZ 280395 B6):

In 700 ml Wasser werden 18 g Calciumhydroxid, 1 g Aktivkohle, 17,7 g (0,08 mol) 2-Amino-4-chlor-5-methyl-benzolsulfonsäure und 4,8 g (0,02 mol) 2-Amino-4,5-dichlorbenzolsulfonsäure eingetragen, auf 60 °C erhitzt und bis zum Lösen aller Komponenten gerührt. Dann werden 13,3 ml einer 40 %igen Natriumnitritlösung zugegeben. Die Lösung wird filtriert. Bei 0 bis 10 °C werden portionsweise 25 ml Salzsäure (31 %) zugegeben.
In 700 ml Wasser werden 14,5 g Calciumcarbonat, 1 g Aktivkohle und 28 g (0,11 mol) 1-(3'-sulfophenyl)-3-methylpyrazol-5-on eingetragen, auf 30 °C eingestellt und bis zum Lösen aller Komponenten gerührt. Die Lösung wird filtriert und auf 10 bis 15 °C gekühlt. Bei 15°C wird portionsweise die vorbereitete Diazoniumsalzlösung zugegeben.
Nach der Kupplung werden in die entstandene Pigmentsuspension 0,8 g einer Lösung von Octadecylamin in verdünnter Essigsäure zugegeben. Das Reaktionsgemisch wird 2 bis 3 h bei 90 bis 95 °C nachgerührt, filtriert und gewaschen. Der Presskuchen wird bei 120 °C getrocknet. Man erhält 53 g gelbes Pigmentpulver.

### Synthesebeispiel 1:

22,1 g (0,1 mol) 2-Amino-4-chlor-5-methylbenzol-1-sulfonsäure werden in 200 ml Wasser eingetragen und mit 9,1 ml Natronlauge (33 %) unter Erwärmen gelöst, geklärt und mit 25,0 ml Salzsäure (31 %) versetzt. Die erhaltene Suspension wird auf 15 °C gekühlt und unter Zugabe von 13,3 ml einer 40 %igen Natriumnitritlösung diazotiert.

In 400 ml Wasser und 11,1 ml Natronlauge (33 %) werden 24,6 g (0,0975 mol) 1-(3'-Sulfophenyl)-3-methyl-5-pyrazolon und 0,7 g (0,0025 mol) 1-(4'-Sulfophenyl)-5-pyrazolon-3-carbonsäure eingetragen und gelöst.

In die 60°C warme Lösung der Kupplungskomponente lässt man die Suspension des Diazoniumsalzes langsam einlaufen, wobei der pH-Wert unter Zugabe von Natronlauge im Bereich von 6,0 bis 6,5 gehalten wird. Nach Beendigung der Kupplung wird die gelbe Suspension auf 80 °C erhitzt. Anschließend werden 33,7 g Kalziumchlorid zugegeben. Die Pigmentsuspension wird 2 Stunden bei 80 °C nachgerührt, filtriert, gewaschen und bei 120 °C getrocknet. Man erhält 48 g gelbes Pigmentpulver.

### Synthesebeispiel 2:

Analog Synthesebeispiel 1. Es werden 22,8 g (0,09 mol) 1-(3'-Sulfophenyl)-3-methyl-5-pyrazolon und 2,8 g (0,01 mol) 1-(4'-Sulfophenyl)-5-pyrazolon-3-carbonsäure vorgelegt. Es wird mit 35,0 g Kalziumchlorid verlackt. Man erhält 44 g gelbes Pigmentpulver.

### Synthesebeispiel 3: (füllt nich unter Anspruchswortlant)

Analog Synthesebeispiel 1. Es werden 19,0 g (0,075 mol) 1-(3'-Sulfophenyl)-3-methyl-5-pyrazolon und 7,1 g (0,025 mol) 1-(4'-Sulfophenyl)-5-pyrazolon-3-carbonsäure vorgelegt. Es wird mit 37,5 g Kalziumchlorid verlackt. Man erhält 39 g gelbes Pigmentpulver.

### Synthesebeispiel 4:

22,1 g (0,1 mol) 2-Amino-4-chlor-5-methylbenzol-1-sulfonsäure werden in 200 ml Wasser eingetragen und mit 9,1 ml Natronlauge (33 %) unter Erwärmen gelöst, geklärt und mit 25,0 ml Salzsäure (31 %) versetzt. Die erhaltene Suspension wird auf 15 °C gekühlt und unter Zugabe von 13,3 ml einer 40 %igen Natriumnitritlösung diazotiert.

In 400 ml Wasser und 11,1 ml Natronlauge (33 %) werden 24,8 g (0,0975 mol) 1-(3'-Sulfophenyl)-3-methyl-5-pyrazolon und 0,6 g (0,0025 mol) 1-(4'-Sulfophenyl)-3-methyl-5-pyrazolon eingetragen und gelöst.

In die 60 °C warme Lösung der Kupplungskomponente lässt man die Suspension des Diazoniumsalzes langsam einlaufen, wobei der pH-Wert unter Zugabe von Natronlauge im Bereich von 6,0 bis 6,5 gehalten wird. Nach Beendigung der Kupplung wird die gelbe Suspension auf 80°C erhitzt. Anschließend werden 33,7 g Kalziumchlorid zugegeben. Die Pigmentsuspension wird 2 Stunden bei 80 °C nachgerührt, filtriert, gewaschen und bei 120°C getrocknet. Man erhält 53 g gelbes Pigmentpulver.

### Synthesebeispiel 5:

21,6 g (0,0975 mol) 2-Amino-4-chlor-5-methylbenzol-1-sulfonsäure werden in 200 ml Wasser eingetragen und mit 9,1 ml Natronlauge (33 %) unter Erwärmen gelöst, geklärt und mit 25,0 ml Salzsäure (31 %) versetzt. Die erhaltene Suspension wird auf 15 °C gekühlt und unter Zugabe von 13,3 ml einer 40 %igen Natriumnitritlösung diazotiert.

In 400 ml Wasser und 11,1 ml Natronlauge (33 %) werden 24,8 g (0,0975 mol) 1-(3'-Sulfophenyl)-3-methyl-5-pyrazolon und eingetragen und gelöst.

In die 60 °C warme Lösung der Kupplungskomponente lässt man die Suspension des Diazoniumsalzes langsam einlaufen, wobei der pH-Wert unter Zugabe von Natronlauge im Bereich von 6,0 bis 6,5 gehalten wird. Nach Beendigung der Kupplung werden 1,2 g (0,0025 mol) 5-Chlor-2-[5-hydroxy-3-methyl-1-(3-sulfophenyl)-1H-pyrazol-4-ylazo]-4-methyl-benzol-1-sulfonsäure hinzu gegeben und die gelbe Suspension auf 80 °C erhitzt. Anschließend werden 40 g Kalziumchlorid zugegeben. Die Pigmentsuspension wird 2 Stunden bei 80 °C nachgerührt, filtriert, gewaschen und bei 120 °C getrocknet. Man erhält 55 g gelbes Pigmentpulver.

### Synthesebeispiel 6:

Analog Synthesebeispiel 5. Es werden 19,9 g (0,09 mol) 2-Amino-4-chlor-5-methylbenzol-1-sulfonsäure diazotiert und auf 22,9 g (0,09 mol) 1-(3'-Sulfophenyl)-3-methyl-5-pyrazolon gekuppelt. Die Kuppelsuspension wird mit 4,8 g (0,01 mol) 5-Chlor-2-[5-hydroxy-3-methyl-1-(3-sulfophenyl)-1H-pyrazol-4-ylazo]-4-methyl-benzol-1-sulfonsäure versetzt und mit 45 g Kalziumchlorid verlackt. Man erhält 53 g gelbes Pigmentpulver.

### Synthesebeispiel 7:

Analog Synthesebeispiel 5. Es werden 16,6 g (0,075 mol) 2-Amino-4-chlor-5-methylbenzol-1-sulfonsäure diazotiert und auf 19,1 g (0,075 mol) 1-(3'-Sulfophenyl)-3-methyl-5-pyrazolon gekuppelt. Die Kuppelsuspension wird mit 12,1 g (0,025 mol) 5-Chlor-2-[5-hydroxy-3-methyl-1-(3-sulfophenyl)-1H-pyrazol-4-ylazo]-4-methyl-benzol-1-sulfonsäure (100 %) versetzt und mit 50 g Kalziumchlorid (77 %) verlackt. Man erhält 53 g gelbes Pigmentpulver.

### Synthesebeispiel 8:

22,1 g (0,1 mol) 2-Amino-4-chlor-5-methylbenzol-1-sulfonsäure werden in 200 ml Wasser eingetragen und mit 9,1 ml Natronlauge (33 %) unter Erwärmen gelöst, geklärt und mit 25,0 ml Salzsäure (31 %) versetzt. Die erhaltene Suspension wird auf 15 °C gekühlt und unter Zugabe von 13,3 ml einer 40 %igen Natriumnitritlösung diazotiert.

In 400 ml Wasser und 11,1 ml Natronlauge (33 %) werden 25,4 g (0,1 mol) 1-(3'-Sulfophenyl)-3-methyl-5-pyrazolon und eingetragen und gelöst.

In die 60 °C warme Lösung der Kupplungskomponente lässt man die Suspension des Diazoniumsalzes langsam einlaufen, wobei der pH-Wert unter Zugabe von Natronlauge im Bereich von 6,0 bis 6,5 gehalten wird. Nach Beendigung der Kupplung werden 1,4 g (0,0025 mol) 4,5-Dichlor-2-[5-hydroxy-3-methyl-1-(3-sulfophenyl)-1H-pyrazol-4-ylazo]-benzolsulfonsäure, Kalziumsalz hinzu gegeben und die gelbe Suspension auf 80 °C erhitzt. Anschließend werden 33,3 g Kalziumchlorid zugegeben. Die Pigmentsuspension wird 2 Stunden bei 80 °C nachgerührt, filtriert, gewaschen und bei 120 °C getrocknet. Man erhält 55 g gelbes Pigmentpulver.

### Synthesebeispiel 9:

Analog Synthesebeispiel 8. Die Kuppelsuspension wird mit 6,0 g (0,011 mol) 4,5-Dichlor-2-[5-hydroxy-3-methyl-1-(3-sulfophenyl)-1H-pyrazol-4-ylazo]-benzolsulfonsäure, Kalziumsalz versetzt. Man erhält 60 g gelbes Pigmentpulver.

### Synthesebeispiel 10:

Analog Synthesebeispiel 8. Die Kuppelsuspension wird mit 12,7 g (0,023 mol) 4,5-Dichlor-2-[5-hydroxy-3-methyl-1-(3-sulfophenyl)-1H-pyrazol-4-ylazo]-benzolsulfonsäure, Kalziumsalz versetzt. Man erhält 67 g gelbes Pigmentpulver.

### Synthesebeispiel 11:

21,6 g (0,0975 mol) 2-Amino-4-chlor-5-methylbenzol-1-sulfonsäure werden in 200 ml Wasser eingetragen und mit 9,1 ml Natronlauge (33 %) unter Erwärmen gelöst, geklärt und mit 25,0 ml Salzsäure (31 %) versetzt. Die erhaltene Suspension wird auf 15 °C gekühlt und unter Zugabe von 13,3 ml einer 40 %igen Natriumnitritlösung diazotiert.

In 400 ml Wasser und 11,1 ml Natronlauge (33 %) werden 24,8 g (0,0975 mol) 1-(3'-Sulfophenyl)-3-methyl-5-pyrazolon und eingetragen und gelöst.

In die 60 °C warme Lösung der Kupplungskomponente lässt man die Suspension des Diazoniumsalzes langsam einlaufen, wobei der pH-Wert unter Zugabe von Natronlauge im Bereich von 6,0 bis 6,5 gehalten wird. Nach Beendigung der Kupplung werden 1,4 g (0,0025 mol) 4,5-Dichlor-2-[5-hydroxy-3-carboxyl-1-(4-sulfophenyl)-1H-pyrazol-4-ylazo]-benzol-1-sulfonsäure hinzu gegeben und die gelbe Suspension auf 80°C erhitzt. Anschließend werden 40 g Kalziumchlorid zugegeben. Die Pigmentsuspension wird 2 Stunden bei 80 °C nachgerührt, filtriert, gewaschen und bei 120 °C getrocknet. Man erhält 54 g gelbes Pigmentpulver.

### Synthesebeispiel 12:

Analog Synthesebeispiel 11. Es werden 19,9 g (0,09 mol) 2-Amino-4-chlor-5-methylbenzol-1-sulfonsäure diazotiert und auf 22,9 g (0,09 mol) 1-(3'-Sulfophenyl)-3-methyl-5-pyrazolon gekuppelt. Die Kuppelsuspension wird mit 5,4 g (0,01 mol) 4,5-Dichlor-2-[5-hydroxy-3-carboxyl-1-(4-sulfophenyl)-1H-pyrazol-4-ylazo]-benzol-1-sulfonsäure versetzt und mit 45 g Kalziumchlorid verlackt. Man erhält 49 g gelbes Pigmentpulver.

### Synthesebeispiel 13: (füllt nicht unter Anspruchswortlant)

Analog Synthesebeispiel 11. Es werden 16,6 g (0,075 mol) 2-Amino-4-chlor-5-methylbenzol-1-sulfonsäure diazotiert und auf 19,1 g (0,075 mol) 1-(3'-Sulfophenyl)-3-methyl-5-pyrazolon gekuppelt. Die Kuppelsuspension wird mit 13,5 g (0,025 mol) 4,5-Dichlor-2-[5-hydroxy-3-carboxyl-1-(4-sulfophenyl)-1H-pyrazol-4-ylazo]-benzol-1-sulfonsäure versetzt und mit 50 g Kalziumchlorid verlackt. Man erhält 41 g gelbes Pigmentpulver.

### Synthesebeispiel 14:

22,1 g (0,1 mol) 2-Amino-4-chlor-5-methylbenzol-1-sulfonsäure werden in 200 ml Wasser eingetragen und mit 9,1 ml Natronlauge (33 %) unter Erwärmen gelöst, geklärt und mit 25,0 ml Salzsäure (31 %) versetzt. Die erhaltene Suspension wird auf 15 °C gekühlt und unter Zugabe von 13,3 ml einer 40 %igen Natriumnitritlösung diazotiert.

In 400 ml Wasser und 11,1 ml Natronlauge (33 %) werden 25,4 g (0,1 mol) 1-(3'-Sulfophenyl)-3-methyl-5-pyrazolon und eingetragen und gelöst.

In die 60 °C warme Lösung der Kupplungskomponente lässt man die Suspension des Diazoniumsalzes langsam einlaufen, wobei der pH-Wert unter Zugabe von Natronlauge im Bereich von 6,0 bis 6,5 gehalten wird. Nach Beendigung der Kupplung werden 1,4 g (0,0026 mol) C.I. Acid Yellow 23 hinzu gegeben und die gelbe Suspension auf 80 °C hoch geheizt. Anschließend werden 40 g Kalziumchlorid zugegeben. Die Pigmentsuspension wird 2 Stunden bei 80 °C nachgerührt, filtriert, gewaschen und bei 120°C getrocknet. Man erhält 53 g gelbes Pigmentpulver.

### Synthesebeispiel 15:

Analog Synthesebeispiel 14. Die Kuppelsuspension wird mit 6,0 g (0,011 mol) C.I. Acid Yellow 23 versetzt und mit 45 g Kalziumchlorid verlackt. Man erhält 51 g gelbes Pigmentpulver.

### Synthesebeispiel 16:

Analog Synthesebeispiel 14. Die Kuppelsuspension wird mit 18,0 g (0,033 mol) C.I. Acid Yellow 23 versetzt und mit 50 g Kalziumchlorid verlackt. Man erhält 48 g gelbes Pigmentpulver.

### Anwendungsbeispiel 1:

682 Teile eines Weich-PVC (Hostalit^{®} S 4170), 308 Teile Diisodecylphthalat und 10 Teile Dibutylzinnthioglykolat werden abgewogen und in einem Mischgefäß vermischt. Dazu wird jeweils 1 Teil Pigmentzusammensetzung aus den Synthesebeispielen 1 bis 16 unter die zubereitete Grundmischung gegeben. Dann wird im Mischer 10 Minuten gemischt, anschließend auf ein Walzwerk gegeben und 8 min bei ca. 130 °C verarbeitet. Man erhält eine transparent eingefärbte Weich-PVC- Matte.

### Anwendungsbeispiel 2:

682 Teile Weich-PVC (Hostalit^{®} S 4170), 308 Teile Diisodecylphthalat, 10 Teile Dibutylzinnthioglykolat und 10 Teile Titandioxidpigment (PV-Echtweiß R 01) werden abgewogen und in einem Mischgefäß vermischt. Dazu wird jeweils 1 Teil Pigmentzusammensetzung aus den Synthesebeispielen 1 bis 16 unter die zubereitete Grundmischung gegeben. Dann wird im Mischer 10 Minuten gemischt,die Mischung anschließend auf ein Walzwerk gegeben und 8 min bei ca. 130 °C verarbeitet. Man erhält eine opak eingefärbte Weich-PVC-Matte.

Prüfung der coloristischen Eigenschaften der Farbmittelzubereitungen:

Zur Bestimmung der Farbstärke- und Farbtondifferenz dH wurde von jeder Pigmentzubereitung eine Anwendungszubereitung gemäß Anwendungsbeispiel 2 hergestellt. Die coloristischen Eigenschaften (Farbstärke und Farbton -dH-) wurden anschließend mit Hilfe eines Spektrophotometers CM-3700d der Firma Minolta bestimmt.

Positive dH-Werte bedeuten Grünstichigkeit, negative dH-Werte bedeuten Rotstichigkeit gegenüber dem Standard.

Zur Bestimmung der Transparenz wurde von jeder Pigmentzubereitung eine Anwendungszubereitung gemäß Anwendungsbeispiel 1 hergestellt. Die Beurteilung der Transparenz erfolgte anschließend visuell.

Als Standard für die Farbstärke, die Farbtondifferenz dH und die Transparenz wurde das Produkt gemäß EP-A-0 361 431, Beispiel 1 herangezogen.

Die erhaltenen Ergebnisse sind in Tabelle 1 wiedergegeben. "tra" bedeutet transparenter, "de" bedeutet deckender als der Standard. "dC" bedeutet Reinheit des Farbtons (Chroma):

**Tabelle 1**

| Beispiel | Farbstärke [%] | dH | dC | Transparenz |
|---|---|---|---|---|
| Vergleichsbeispiel | 94,3 | -2,07 | -0,97 | 5 de |
| Standard | 100% | +/-0 | +/- 0 | -- |

| Synthesebeispiel | | | | |
|---|---|---|---|---|
| 1 | 138,0 | 4, 34 | 0,71 | 5 tra |
| 2 | 110,4 | 4,04 | 0,49 | 5 tra |
| 3 | 123,0 | 4,36 | 0,63 | 5 tra |
| 4 | 112,2 | 4,32 | 0,19 | 5 tra |
| 5 | 121,6 | 1,19 | 0,34 | 4 tra |
| 6 | 115,9 | 0,13 | 0,06 | 4 tra |
| 7 | 110,6 | -1,09 | -0,40 | 4 tra |
| 8 | 123,1 | 1,23 | 0,64 | 4 tra |
| 9 | 121,6 | 0,90 | 0,4 | 3 tra |
| 10 | 126,7 | 1,33 | 0,32 | 4 tra |
| 11 | 113,4 | 2,59 | 0,37 | 4 tra |
| 12 | 111,2 | 3,11 | 0,46 | 4 tra |
| 13 | 110,8 | 2,88 | 0,44 | 5 tra |
| 14 | 116,9 | 1,31 | 0,38 | 4 tra |
| 15 | 116,4 | 1,29 | 0,30 | 4 tra |
| 16 | 115,3 | 1,08 | 0,19 | 4 tra |

## Patentansprüche

1. Pigmentzusammensetzung auf Basis von P.Y. 191 der Formel (1) 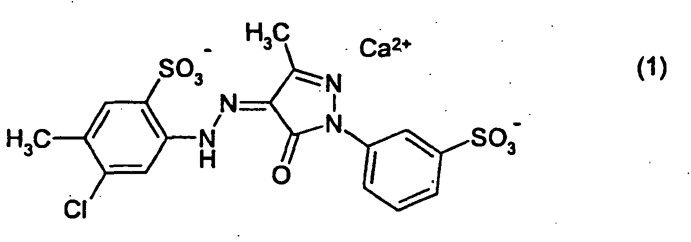 enthaltend 0,05 bis 5 Mol-%, bezogen auf die Summe von P.Y. 191 und dem weiteren gelben Farbmittel, mindestens eines weiteren gelben Farbmittels der Formel (2) und/oder von C.I. Pigment Yellow 100, 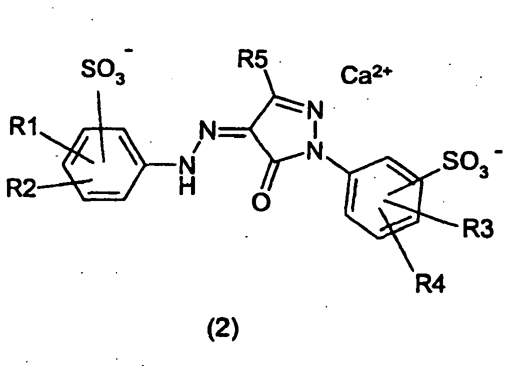
worin R1, R2, R3 und R4 unabhängig voneinander Wasserstoff, Halogen, -CH₃, -NO₂, oder NH-R6 mit R6 gleich C₁-C₄-Alkyl bedeuten;
R5 Methyl oder Carboxyl bedeutet,
und wobei die Verbindung der Formel (2) ungleich C.I. Pigment Yellow 191 ist.

2. Pigmentzusammensetzung nach Anspruch 1, enthaltend 0,1 bis 5 Mol% des Weiteren gelben Farbmittels.

3. Pigmentzusammensetzung nach Anspruch 1, enthaltend 1 bis 5 Mol-% des weiteren gelben Farbmittels.

4. Pigmentzusammensetzung nach einem oder mehreren der Ansprüche 1 bis 3, **dadurch gekennzeichnet, dass** in der Verbindung der Formel (2) R1 = R2 = Cl, R3 = R4 = H oder Cl, und R5 = CH₃ bedeuten.

5. Pigmentzusammensetzung nach einem oder mehreren der Ansprüche 1 bis 4, **dadurch gekennzeichnet, dass** die Verbindung der Formel (2) C.I. Pigment Yellow 183 ist.

6. Pigmentzusammensetzung nach einem oder mehreren der Ansprüche 1 bis 5, dadurch hergestellt, dass mindestens einer der nachfolgenden Herstellungsschritte für P.Y. 191 und das weitere gelbe Farbmittel gemeinsam durchgeführt werden:
(a) Azokupplung; (b) Verlackung.

7. Verfahren zur Herstellung einer Pigmentzusammensetzung nach einem oder mehreren der Ansprüche 1 bis 6 durch Diazotierung, Azokupplung, Verlackung und gegebenenfalls Finish, **dadurch gekennzeichnet, dass** mindestens einer der nachfolgenden Herstellungsschritte für P.Y. 191 und das weitere gelbe Farbmittel gemeinsam durchgeführt werden: (a) Azokupplung; (b) Verlackung.

8. Verfahren nach Anspruch 7, **dadurch gekennzeichnet, dass** zwei unterschiedliche Amine der Formel (4) 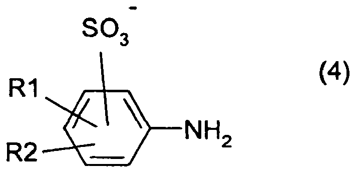
worin R1 und R2 unabhängig voneinander Wasserstoff, Halogen, -CH₃, -NO₂ oder
NH-R6 mit R6 gleich C₁-C₄-Alkyl bedeuten,
getrennt diazotiert und dann gemeinsam auf 1-(3'-Sulfophenyl)-3-methyl-5-pyrazolon gekuppelt werden.

9. Verfahren nach Anspruch 7, **dadurch gekennzeichnet, dass** man 2-Amino-4-chlor-5-methyl-benzolsulfonsäure diazotiert und auf eine Mischung aus 1-(3'-Sulfophenyl)-3-methyl-5-pyrazolon und einer davon unterschiedlichen Verbindung der allgemeinen Formel (5) kuppelt 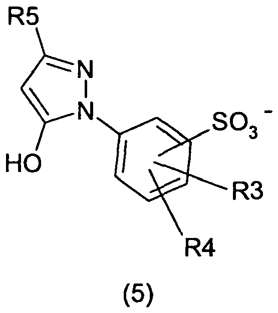 worin
R3 und R4 unabhängig voneinander Wasserstoff, Halogen, -CH₃, -NO₂ oder NH-R6 mit R6 gleich C₁-C₄-Alkyl bedeuten; und
R5 Methyl oder Carboxyl bedeutet.

10. Verwendung einer Pigmentzusammensetzung nach einem oder mehreren der Ansprüche 1 bis 6 zum Pigmentieren und Färben von natürlichen und synthetischen Materialien aller Art, insbesondere von Anstrichmitteln, Beschichtungssystemen, wie Tapetenfarben, Druckfarben, Dispersions- und Lackfarben, die wasser- und/oder lösemittelhaltig sind, und Kunststoffen.

11. Verwendung nach Anspruch 10 zum Pigmentieren von elektrophotographischen Tonern, Inkjet-Tinten, Metallic-Lacken und Farbfiltern.

## Claims

1. Pigment composition based on P.Y. 191 of formula (1) 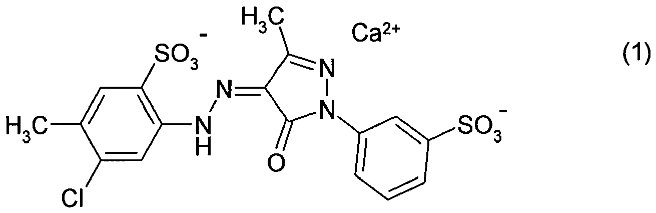 comprising 0.05 to 5 mol%, based on the sum total of P.Y. 191 and the further yellow colorant, of at least one further yellow colorant of formula (2) and/or of C.I. Pigment Yellow 100, 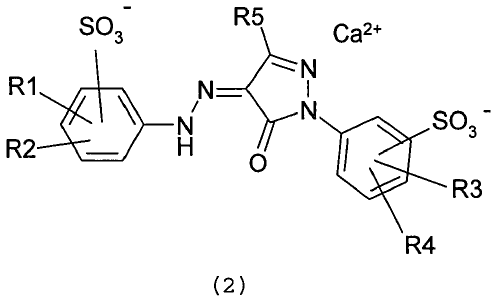
where R1, R2, R3 and R4 are each independently hydrogen, halogen, -CH₃, -NO₂ or NH-R6 where R6 is C₁-C₄-alkyl;
R5 is methyl or carboxyl,
and the compound of formula (2) is not C.I. Pigment Yellow 191.

2. Pigment composition according to Claim 1, comprising 0.1 to 5 mol% of the further yellow colorant.

3. Pigment composition according to Claim 1, comprising 1 to 5 mol% of the further yellow colorant.

4. Pigment composition according to one or more of Claims 1 to 3, **characterized in that** in the compound of formula (2) R1 = R2 = Cl, R3 = R4 = H or Cl and R5 = CH₃.

5. Pigment composition according to one or more of Claims 1 to 4, **characterized in that** the compound of formula (2) is C.I. Pigment Yellow 183.

6. Pigment composition according to one or more of Claims 1 to 5, obtained by at least one of the following production steps for P.Y. 191 and the further yellow colorant being carried out conjointly:
(a) azo coupling; (b) laking.

7. Process for producing a pigment composition according to one or more of Claims 1 to 6 by diazotization, azo coupling, laking and optionally finishing, **characterized in that** at least one of the following production steps for P.Y. 191 and the further yellow colorant is carried out conjointly: (a) azo coupling; (b) laking.

8. Process according to Claim 7, **characterized in that** two different amines of formula (4) 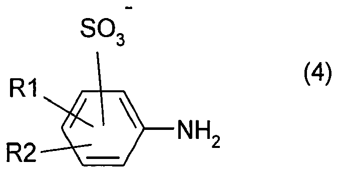 where R1 and R2 are each independently hydrogen, halogen, -CH₃, -NO₂
or
NH-R6 where R6 is C₁-C₄-alkyl,
are separately diazotized and then conjointly coupled onto 1-(3'-sulfophenyl)-3-methyl-5-pyrazolone.

9. Process according to Claim 7, **characterized in that** 2-amino-4-chloro-5-methylbenzenesulfonic acid is diazotized and coupled onto a mixture of 1-(3'-sulfophenyl)-3-methyl-5-pyrazolone and a different compound of general formula (5) 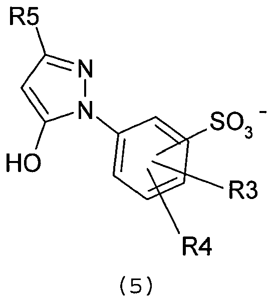 where
R3 and R4 are each independently hydrogen, halogen, -CH₃, -NO₂ or NH-R6 where R6 is C₁-C₄-alkyl; and
R5 is methyl or carboxyl.

10. Use of a pigment composition according to one or more of Claims 1 to 6 for pigmentation and coloration of natural and synthetic materials of any kind, particularly of paints, coating systems, such as wallpaper colors, printing inks, emulsion and varnish colors which are water- and/or solvent-containing, and plastics.

11. Use according to Claim 10 for pigmentation of electrophotographic toners, inkjet inks, metallic varnishes and color filters.

## Revendications

1. Composition de pigment à base de pigment jaune 191 de la formule (1) 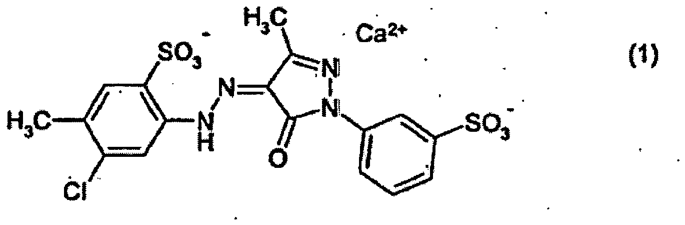 contenant 0,05 à 5 % molaires, rapportés à la somme du pigment jaune 191 et de l'autre colorant jaune, d'au moins un autre colorant jaune de la formule (2) et/ou de pigment jaune C. 1. 100, 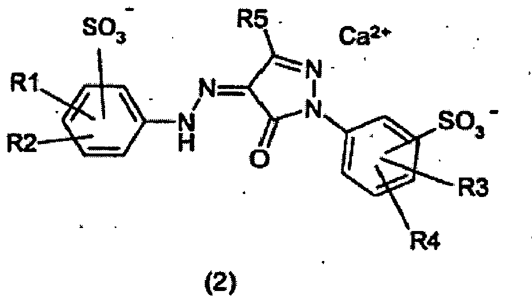
dans laquelle R1, R2, R3 et R4 sont indépendamment l'un de l'autre un hydrogène, halogène, -CH₃, -NO₂, ou NH-R6 avec R6 égal à un alkyle(C₁-C₄);
R5 est un méthyle ou carboxyle,
et dans laquelle le composé de la formule (2) n'est pas égal au pigment jaune C. I. 191.

2. Composition de pigment selon la revendication 1, contenant 0,1 à 5 % molaires de l'autre colorant jaune.

3. Composition de pigment selon la revendication 1, contenant 1 à 5 % molaires de l'autre colorant jaune.

4. Composition de pigment selon une ou plusieurs des revendications 1 à 3, **caractérisée en ce que**, dans le composé de la formule (2), R1 = R2 = Cl, R3 = R4 = H ou Cl, et R5 = CH₃.

5. Composition de pigment selon une ou plusieurs des revendications 1 à 4, **caractérisée en ce que** le composé de la formule (2) est le pigment jaune C. 1. 183.

6. Composition de pigment selon une ou plusieurs des revendications 1 à 5, **caractérisée en ce que** l'on effectue en commun au moins une des étapes de production suivantes pour le pigment jaune 191 et l'autre colorant jaune: (a) copulation azoïque; (b) formation de pigments.

7. Procédé de production d'une composition de pigment selon une ou plusieurs des revendications 1 à 6 par diazotation, copulation azoïque, formation de pigments et éventuellement finition, **caractérisé en ce que** l'on effectue en commun au moins une des étapes de production suivantes pour le pigment jaune 191 et l'autre colorant jaune: (a) copulation azoïque; (b) formation de pigments.

8. Procédé selon la revendication 7, **caractérisé en ce que** l'on couple deux amines différentes de la formule (4) 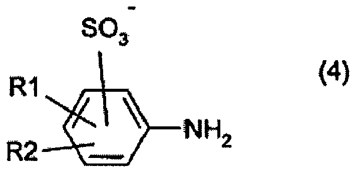 dans laquelle R1 et R2 sont indépendamment l'un de l'autre un hydrogène, halogène, -CH₃, -NO₂ ou NH-R6 avec R6 égal à alkyle (C₁-C₄), on les diazote séparément et on les couple ensuite en commun sur de la 1-(3'-sulfophényl)-3-méthyl-5-pyrazolone.

9. Procédé selon la revendication 7, **caractérisé en ce que** l'on diazote de l'acide 2-amino-4-chlor-5-méthyl-benzolsulfonique et on le couple sur un mélange de 1-(3'-sulfophényl)-3-méthyl-5-pyrazolone et d'un composé différent de celui-ci de la formule générale (5) 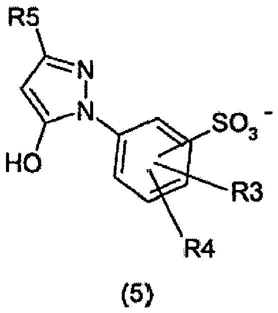 dans laquelle
R3 et R4 sont indépendamment l'un de l'autre un hydrogène, halogène, -CH₃, -NO₂ ou NH-R6 avec R6 égal à alkyle (C₁-C₄) ; et
R5 est un méthyle ou carboxyle.

10. Utilisation d'une composition de pigment selon une ou plusieurs des revendications 1 à 6 pour la pigmentation et la coloration de matières naturelles ou synthétiques de toutes natures, en particulier d'agents couvrants, de systèmes de revêtement, comme des colorants pour papier peint, des encres d'imprimerie, des peintures de dispersion et de laquage, qui contiennent de l'eau et/ou un solvant, et des matières plastiques.

11. Utilisation selon la revendication 10 pour la pigmentation de toners électrophotographiques, d'encres pour jet d'encre, de laques métalliques et de filtres de couleur.
